# EUROPÄISCHE PATENTSCHRIFT

(11) **EP 0 894 518 B1**
(45) Veröffentlichungstag und Bekanntmachung des Hinweises auf die Patenterteilung: **24.03.2004**
(21) Anmeldenummer: 98113291.3
(22) Anmeldetag: 16.07.1998
(51) Int. Cl.: B01D 25/172, B01D 25/32

(54) **Antrieb für Reinigungs- und Verschiebevorrichtungen an Filterpressen**
Driving means for cleaning and shifting devices in filter presses
Moyens d'entraînement pour dispositifs de nettoyage et déplacement dans des filtre-presses

(30) Priorität: 01.08.1997 DE 19733486
(43) Veröffentlichungstag der Anmeldung: 03.02.1999
(73) Patentinhaber: Erich Netzsch GmbH & Co. Holding KG, D-95100 Selb (DE)
(72) Erfinder: Tröger, Gerhard, 95030 Hof (DE)

(56) Entgegenhaltungen:
- EP-A- 0 247 445
- WO-A-88/03832
- FR-A- 2 287 258

## Beschreibung

Die Erfindung betrifft einen Antrieb für die Reingigungs- und/oder Filterplattenverschiebevorrichtung an Filterpressen entsprechend dem Oberbegriff des Patentanspruchs 1.

Aus der DE 30 43 821 C2 geht eine Filterpresse mit einem Reinigungswagen hervor. Die einzige Figur zeigt dabei die Filterpresse mit einem Kopfträger an dem die Filterplatten hängen. Die dazu verwendeten Filterplattenaufhängungen sind mit der Filterplatte verschraubt und am horizontalen Träger mittels Rollen aufgehängt. Der Reinigungswagen der auf dem Kopfträger vor- und rückwärts beweglich ist, trägt sowohl die Wascheinrichtung wie auch eine Einheit zum Verschieben der Filterplatten.

Die DE 18 10 112 C2 zeigt eine Filterpresse mit auf Seitenholmen aufliegenden Filterplatten. Die mit Rollen versehene Verschiebevorrichtung dagegen fährt auf Führungsstangen oberhalb des Filterplattenpakets. Zum Transport der Filterplatten können verschiedenartig gestaltete Ausführungen der Transportelemente die Filterplatten jeweils an ihrer oberen Seite greifen. Der Schlitten der Verschiebevorrichtung sitzt anhand seiner Rollen direkt auf Führungsstangen auf.

Die DE 28 23 501 C1 zeigt in Figur 4 die Transporteinrichtung für die Waschvorrichtung. Der dargestellte Wagen läuft auf einem über den Filterplatten befindlichen Träger auf Rollen. Auf dem Träger kann, wie beispielsweise ausgeführt wird, auch eine Kette oder eine Zahnstange o.ä. angeordnet sein, in die ein von einem Motor direkt angetriebenes Antriebselement eingreift.

Eine Filterpresse mit zwei unterschiedlichen Antriebssystemen für die Bewegung der Verschiebevorrrichtung auf Horizontalträgern und für die eigenständige Vereinzelung der Filterplatten zeigen die Figuren 1 und 6 der DE 39 24 938 C1. Die Längsbewegung des Schlittens der Verschiebevorrichtung geschieht über einen Antrieb, der auf Antriebsrollen einwirkt. Die Rollen selbst liegen auf horizontalen Schienen auf. Zur Verschiebung der Filterplatten werden eine mit Klinken versehene Kette und ein Sternrad eingesetzt. Die Kette läuft über zwei Zahnräder um, dabei greifen die Klinken an der Kette jeweils in die von einem Sternrad freigegebene Filterplatte, wogegen die nächste durch das Sternrad zurückgehalten wird.

Bei einer Waschvorrichtung für Filtertücher, entsprechend der EP 247 445 A1, kommt ein Spritzkopf zum Einsatz, der in den Zwischenraum zwischen zwei Filterplatten eingreift und darin die seitlich an den Filterplatten anliegenden Filtertücher reinigt. Der Spritzkopf ist auf einer Trägerbrücke angeordnet, die entlang des Filterplattenpakets verfahrbar ist. Die Bewegung zwischen den Filterplatten vollzieht der Spritzkopf, der auf einem Laufwagen befestigt ist, auf Führungsschienen. Der Antrieb der gesamten Trägerbrücke erfolgt hier über eine Spindel, Kette oder Zahnriemen.

Aufgabe der vorliegenden Erfindung ist es, einen Antrieb für Reinigungs- und/oder Filterplattenverschiebevorrichtungen so zu gestalten, daß eine verbesserte Übertragung der Antriebsleistung bei hoher Laufruhe und geringer Verschmutzung erreicht wird.

Diese Aufgabe ist erfindungsgemäß durch die kennzeichnenden Merkmale des Anspruch 1 gelöst.

Durch die erfindungsgemäßen Maßnahmen vergrößert sich die Fläche zur Übertragung der Traktion über die sich die Antriebsleistung vom Antrieb auf die Führungen übertragen läßt.

Sowohl der Antrieb wie auch das Übertragungsmittel - im speziellen Erfindungsfall der Zahnriemen - unterliegen hierbei einer wesentlich schonenderen Betriebsweise als beim Stand der Technik.

In der Weiterbildung der Erfindung nach den Unteransprüchen kommen Zahnscheiben in Verbindung mit einem Zahnriemen zum Einsatz, deren Zähne ineinandergreifen. Aufgrund der Verwendung eines unendlichen Zahnriemens sinkt der Verschmutzungsgrad, da die Zahnscheiben nahezu vollständig abgedeckt sind.

Die Verwendung einer schienen- oder leistenartigen Auflage auf dem Träger gibt die Möglichkeit, daß der Zahnriemen auf einem nichtmetallischen Trägermaterial abrollt, wobei die Haftung und auch die Laufruhe wesentlich beeinflußt werden können.

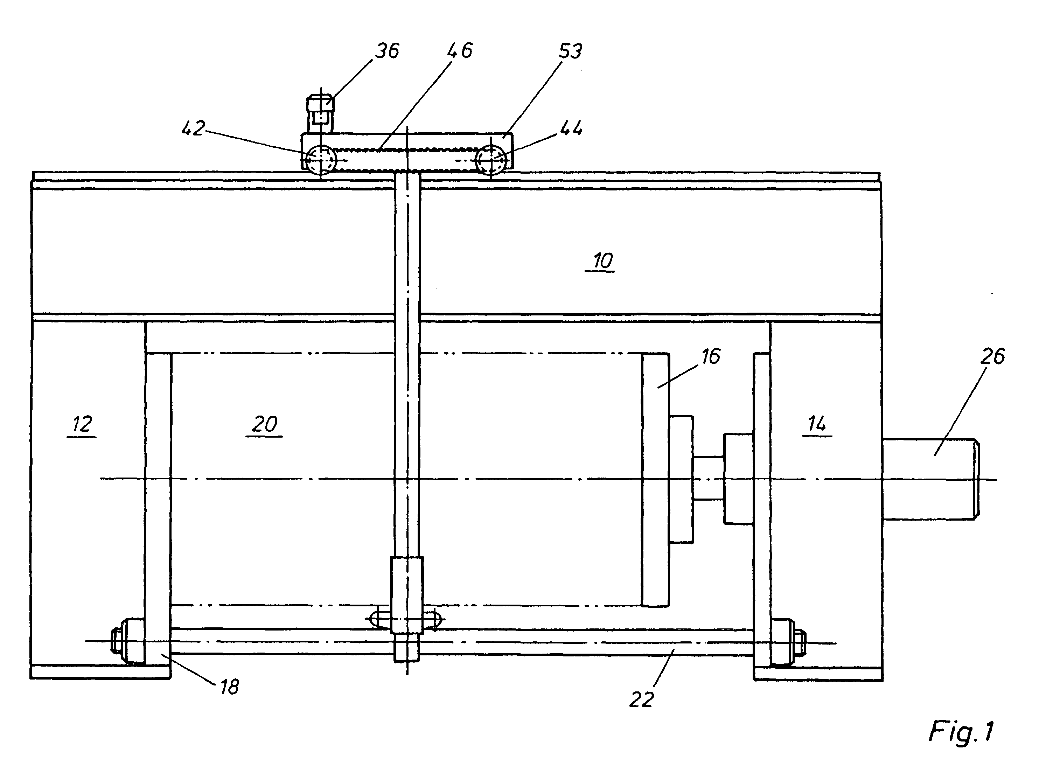

Obwohl die Darstellung des Ausführungsbeispiels gem. Figur 1 einen Transportschlitten für eine Waschvorrichtung zeigt, läßt sich der erfindungsgemäße Antrieb auch bei Filterplattentransportvorrichtungen oder Kombinationen aus beidem verwenden.

In einer erfindungsgemäßen Weiterbildung weisen die Zahnscheiben eine Führung für den Zahnriemen auf. Die Führung besteht aus einer Nut in der Umfangsfläche der Zahnscheiben in die der Steg des Zahnriemens eingreift.

Nachfolgend wird ein Ausführungsbeispiel der Erfindung anhand der Zeichnungen näher erläutert:

Es zeigen:
- Figur 1: Eine schematische Darstellung einer Filterpresse mit Waschvorrichtung in der Seitenansicht
- Figur 2: Vertikaler Schnitt der Filterpresse mit Waschvorrichtung
- Figur 3: Zahnriemenführung mit Aufbruch
- Figur 4: Zahnriemenführung mit Bügel
- Figur 5: Seitenansicht des Antriebs
- Figur 6: Zahnriemenführung auf Kunststoffprofil
- Figur 7: Zahnscheibe mit Führungsnut

Die Figur 1 zeigt eine Filterpresse in Längsseitenansicht mit einer Trägerkonstruktion 10, die auf seitlichen Ständern 12, 14 aufsitzt. Zwischen den Ständern 12, 14 hängt das aus mehreren Filterplatten bestehende und zwischen der Kopfplatte 16 und der Endplatte 18 zusammengespannte Filterplattenpaket 20. Zur Fixierung und Stabilisierung des gesamten Filterpressenrahmens verbinden zwei Zugstangen 22, 24 die Ständer 12, 14. Im Ausführungsbeispiel sind die Filterplatten von der Kolbenzylindereinheit 26 zusammengespannt. Die Reinigung der Filtertücher findet in bestimmten Zyklen oder bei Bedarf statt. Dazu kommt eine Reinigungsvorrichtung 28 die trocken oder naß reinigen kann zum Einsatz, die auf dem oberen Flansch einer der Träger 30, 32 aufliegt und die an der unteren Zugstange 22 geführt und gestützt ist.

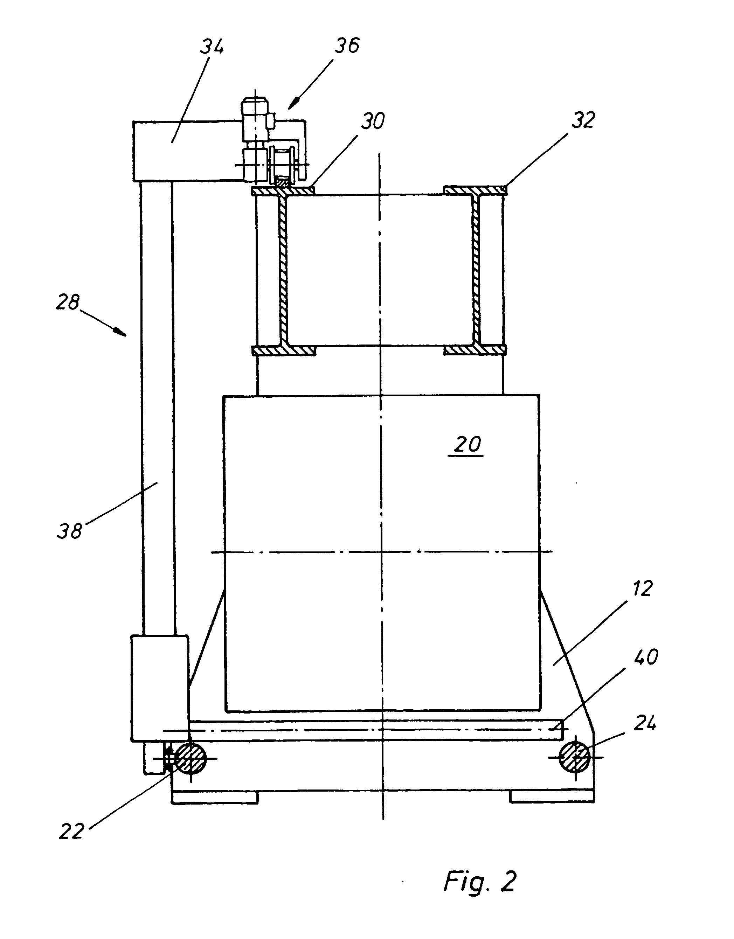

Die in Figur 2 beispielsweise dargestellte Waschvorrichtung weist einen oberen Querträger 34 auf, an dem rechts der Antrieb 36 sitzt und links die senkrechte Führung 38 für den Waschbalken 40 befestigt ist. Der Waschbalken hebt und senkt sich in jeder geöffneten Filterkammer, wobei Wasser unter hohem Druck aus den Düsen des Waschbalkens Reste des Filterkuchens von den Filtertüchern abspritzt.

Der für den Transport der Reinigungsvorrichtung entlang dem Träger 30 vorgesehene Antrieb 36 überträgt seine Antriebsleistung über ein Getriebe auf die Zahnrolle bzw. Zahnscheibe 42. Diese direkt mit dem Antrieb gekoppelte Zahnscheibe 42 wiederum treibt eine weitere Zahnscheibe 44 an, wobei als Antriebsmittel ein Zahnriemen 46 zum Einsatz kommt. Der unendliche Zahnriemen umschlingt die beiden Zahnscheiben 42, 44, wobei die Zähne 48 der Zahnscheiben 42, 44 zwischen die Zähne 50 des Zahnriemens 46 eingreifen. Die Stabilität des Zahnriemens 46 wird erhöht durch eingelagerte Armierungsdrähte 52.

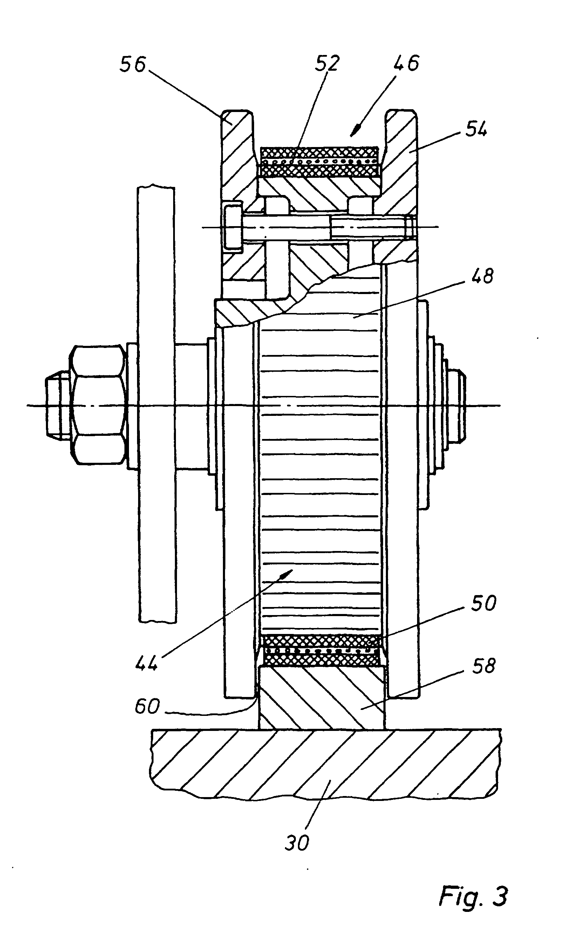

Die gesamte, in diesem Fall die Reinigungsvorrichtung 28 bewegende Antriebseinheit, ist am Ende des Querträgers 34 in einem Schlitten 53 gehalten. Die Zahnscheiben sind an diesem Schlitten durch Bolzen und Muttern befestigt. In Figur 3 ist die Zahnscheibe 44 an beiden Längsseiten mit Scheiben 54, 56 belegt, die auch als Spurkranzrollen bezeichnet werden. Diese Scheiben 54, 56 ragen über den Durchmesser der Zahnscheiben 42, 44 hinaus, so daß sie in ihrem unteren Bereich eine Führungsleiste 58 zwischen sich aufnehmen. Die Führungsleiste selbst zentriert demnach die Zahnscheibe durch Anliegen der Scheibenflanken 60 an den Längsseiten der Führungsleiste 58. Aufgrund der Vervielfachung der Traktionspunkte, herbeigeführt über die Führung des Zahnriemens über zwei Zahnscheiben 42, 44 auf der Führungsleiste 58, erhöht sich der Wirkungsgrad des Antriebs erheblich. Ein weiterer Vorteil liegt in der Verwendung des unendlichen Zahnriemens 46, der beide Zahnscheiben 42, 44 umschlingt und damit die ansonsten schnell verschmutzenden Verzahnungen bei bloßer Ritzelverwendung vermeidet.

Nachdem die Zahnscheiben 42, 44 direkt auf dem mehr oder weniger elastischen Zahnriemen aufliegen bzw. abrollen, ist damit auch eine geräuscharme Betriebsweise verbunden.

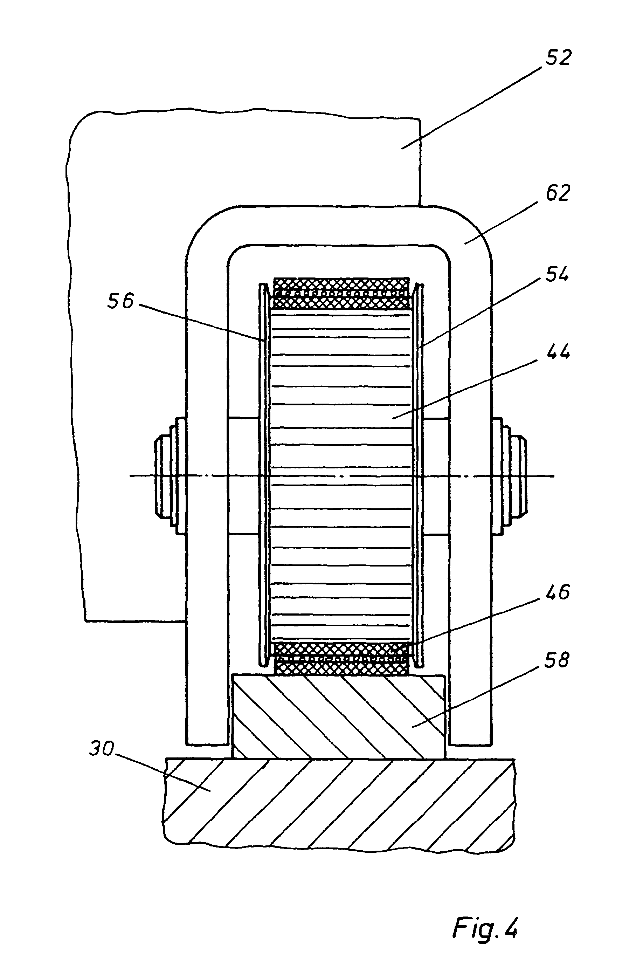

Aus Figur 4 geht eine Ausführungsform hervor, bei der der Zahnriemen selbst und die gesamte Antriebseinheit eine eigene Seitenführung aufweisen. Dazu sind die Zahnscheiben 42, 44 seitlich mit den Scheiben 54, 56, auch Bordscheiben genannt, belegt und zusätzlich von einem U-förmigen Bügel 62 überspannt. Da der gesamte Antrieb hierbei vom Bügel zentriert und geführt wird, läßt sich die getrennt bewerkstelligte Zahnriemenausführung exakter auslegen bzw. die Führung des gesamten Schlittens robuster ausführen.

Anstatt des Bügels kann/können der/die Träger auch U-förmige nach oben offene Profile tragen. Diese Profile können wiederum, sofern sie aus Metall bestehen, mit einer elastischen Auflage versehen sein, um erhöhte Geräuscherzeugung zu vermeiden.

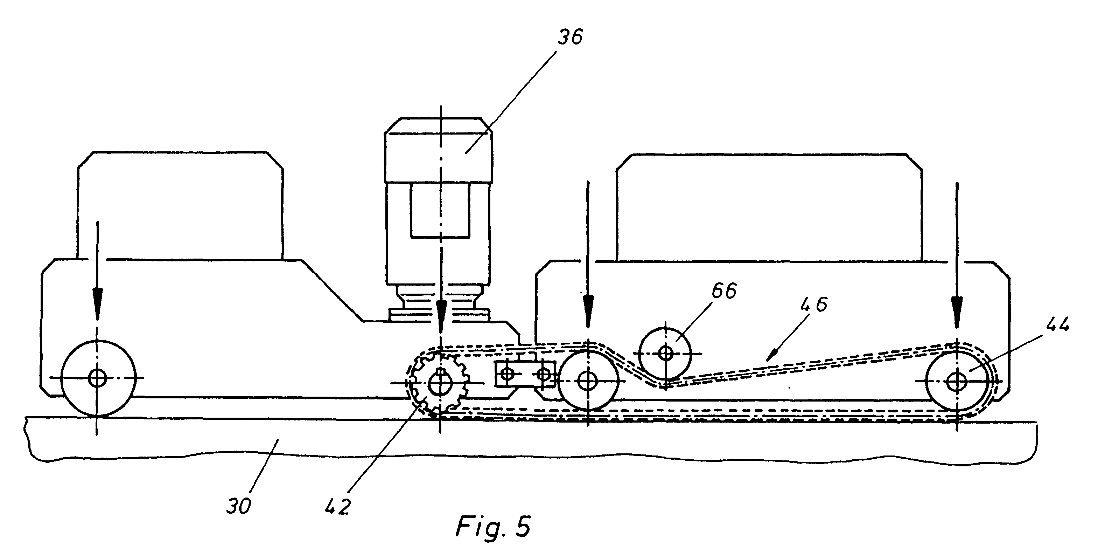

Aus Figur 5 geht eine weitere Variante der Erfindung hervor, bei der der Antrieb an einem ersten Schlitten sitzt. Das mit dem Antrieb verbundene Zahnrad umschlingt einen Zahnriemen, der mit den Scheiben eines zweiten Schlittens in Kontakt steht. Aufgrund der Länge des Riemens ist eine Spannrolle 66 zwischen den beiden Scheiben des zweiten Schlittens angeordnet. Die Anzahl der vom Zahnriemen umschlungenen Elemente vergrößert die Fläche zur Übertragung der Antriebsleistung (Traktion).

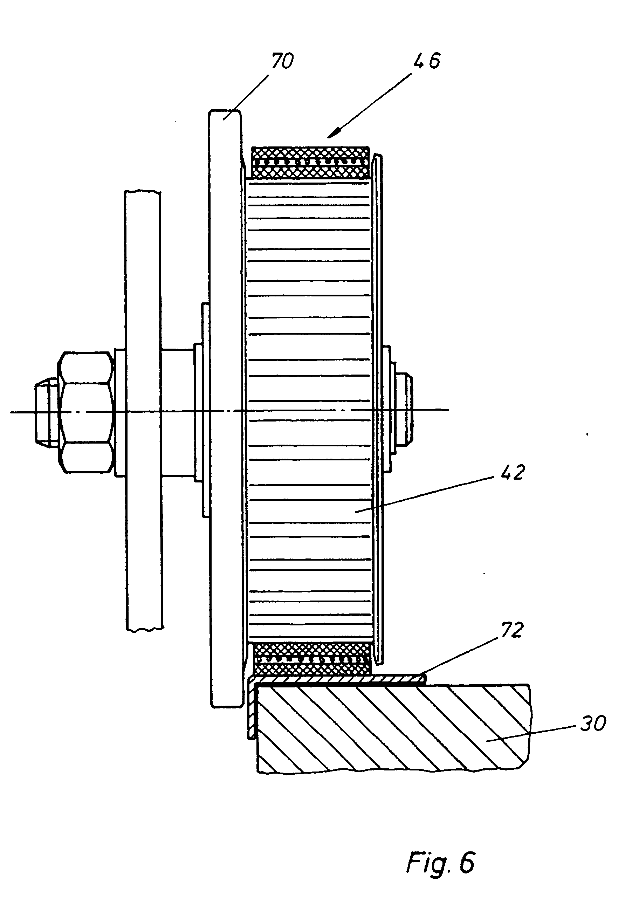

Aus Figur 6 geht eine Ausführungsform der Zahnscheiben 42, 44 hervor, die aus einer Spurkranzrolle mit beidseitiger Führung besteht. Zusätzlich dazu ist an einer Seite des Zahnriemens 46 eine größer dimensionierte Führungsscheibe 70 vorgesehen, die mit ihrer Innenseite am Träger 30 oder an einer Auflage 72 auf dem Träger geführt ist. Als Material für die Auflage kommt hierbei ein Kunststoff zum Einsatz. Verbunden wird der Kunststoff mit dem metallischen Träger durch einen Klebstoff. Die Auflage aus Kunststoff ist im vorliegenden Fall rechtwinklig geformt. Sie umgibt den Träger auf seiner oberen und seitlichen Anlagefläche.

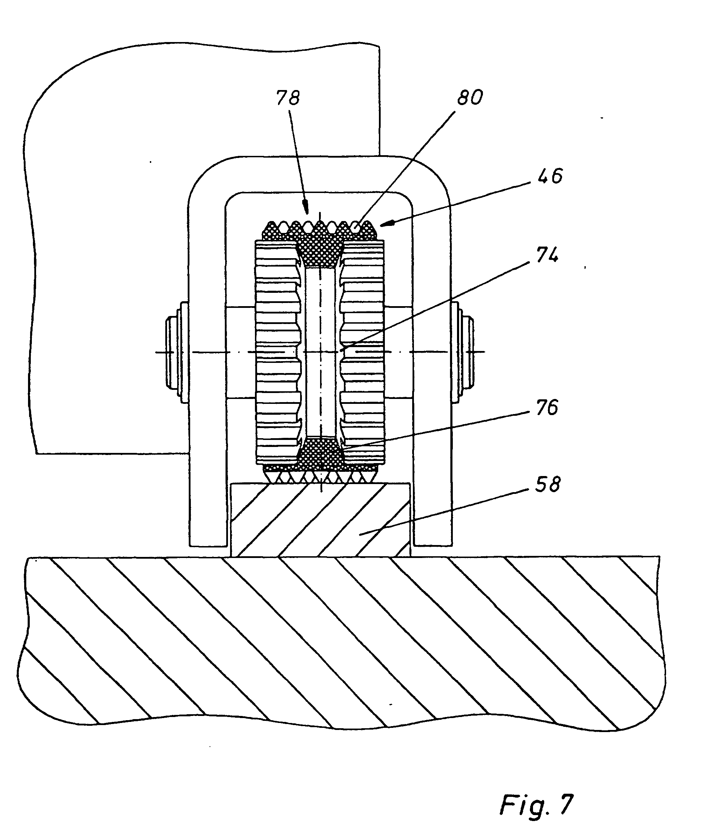

Figur 7 zeigt eine besondere Führung des Zahnriemens 46 an den Zahnrädern 42, 44. Die Zahnräder haben in diesem Fall eine Nut 74 in deren Umfangsfläche. In dieser Nut wird der Steg 76 des Zahnriemens 46 geführt. In die beidseitige Verzahnung neben der Nut 74 greift der Zahnriemen 46 ein. Der Zahnriemen 46 hat auf seiner Lauffläche 78 ein Profil 80.

## Patentansprüche

1. Antrieb für eine auf einem horizontalen Träger (30, 32) aufgesetzte Reinigungs- und/oder Filterplattenverschiebevorrichtung an Filterpressen mit an horizontal angeordneten Trägem (30, 32) aufgehängten Filterplatten, die beim Filtriervorgang als Filterplattenpaket (20) dicht aneinander anliegen und nach dem Filtriervorgang vereinzelt werden, und daß der Antrieb (36) mit einer ersten Scheibe (42) und über einen unendlichen Riemen (46) mit mindestens einer weiteren Scheibe (44) so verbunden ist, daß der Riemen (46) direkt auf einem Träger (30, 32) oder einer mit dem Träger verbundenen Auflage (58, 72) abrollt.

2. Antrieb nach Anspruch 1,
**dadurch gekennzeichnet, daß** der unendliche Riemen (46) ein Zahnriemen ist.

3. Antrieb nach Anspruch 2,
**dadurch gekennzeichnet, daß** die Scheiben (42, 44) mit einer Außenverzahnung (48) versehen sind, in die die Zähne (50) des Zahnriemens (46) eingreifen und der Zahnriemen (46) von ein- oder beidseitig über diese Zahnscheiben (42,44) überstehenden Scheiben (54, 56) begrenzt ist.

4. Antrieb nach Anspruch 2 oder 3,
**dadurch gekennzeichnet, daß** der Zahnriemen (46) auf einer auf den Träger (30, 32) aufgesetzten Führungsleiste (58) aufliegt, der mindestens einseitig eine als Anschlag dienende Scheibe (54) zugeordnet ist.

5. Antrieb nach Anspruch 4,
**dadurch gekennzeichnet, daß** die Zahnscheiben (42, 44) ein U-förmiger Bügel (62) umgreift, dessen Schenkelenden beidseitig an den Längsseiten der Führungsleiste (58) geführt sind.

6. Antrieb nach Anspruch 4 oder 5,
**dadurch gekennzeichnet, daß** die Führungsleiste (58) aus einem nichtmetallischen Material besteht.

7. Antrieb nach einem der Ansprüche 1-6,
**dadurch gekennzeichnet, daß** die Scheiben (42, 44) auf ihrer Umfangsfläche eine Führung für den Riemen (46) aufweisen.

8. Antrieb nach Anspruch 7,
**dadurch gekennzeichnet, daß** die Scheiben (42, 44) eine zentrische Nut (74) aufweisen, in der der Steg (76) des Zahnriemens (46) geführt ist.

9. Antrieb nach Anspruch 8,
**dadurch gekennzeichnet, daß** die Scheiben (42. 44) beidseitig von der Nut eine Verzahnung aufweisen.

## Claims

1. Driving system for a filter plate cleaning and/or un shifting device in filter presses, which is mounted on a horizontal support (30, 32) and comprises filter plates suspended from the horizontally disposed supports (30, 32), these plates bearing closely to each other in the form of a plate package (20) during the filtering operation and being separated form each other after the filtering operation, and that the driving system (36) is connected to a first disc (42) and, via an endless belt (46), to at least one additional disc (44) in such a way that said belt (46) runs directly on a support (30, 32) or on a rest (58, 72) connected to said support.

2. Driving system according to Claim 1,
**characterised in that** said endless belt (46) is a toothed belt.

3. Driving system according to Claim 2,
**characterised in that** said discs (42, 44) are provided with an outside toothing (48), wherein the teeth (50) of said toothed belt are engaged, and that said toothed belt (46) is limited by discs (54, 56) projecting on one side or on both sides from these toothed discs (42, 44).

4. Driving system according to Claim 2 or 3,
**characterised in that** said toothed belt (46) is supported on a guiding bar (58) mounted on said supports (30, 32), to which bar a disc (54) is assigned, at least one side, that serves as stop.

5. Driving system according to Claim 4,
**characterised in that** a U-shaped bow (62) encloses said toothed discs (42, 44), whose leg ends are guided on both sides on the longitudinal edges of said guiding bar (58).

6. Driving system according to Claim 4 or 5,
**characterised in that** said guiding bar (58) is made of a non-metallic material.

7. Driving system according to any of the Claims 1 to 6,
**characterised in that** said discs (42, 44) present a guide for said belt (46) on their peripheral surface.

8. Driving system according to Claim 7,
**characterised in that** said discs (42, 44) comprise a centred groove (74) in which the crossbar (76) of said toothed belt (46) is guided.

9. Driving system according to Claim 8,
**characterised in that** said discs (42, 44) present a toothing on both sides of said groove.

## Revendications

1. Système d'entraînement pour un dispositif de nettoyage et/ou de déplacement des plateaux de filtrage dans des filtres-presses, qui est attaché sur un support horizontal (30, 32) et comprend des plateaux filtre suspendus aux supports (30, 32) en arrangement horizontal, ces plateaux portant étroitement l'un contre l'autre sous forme d'un paquet de plateaux (20) au cours de l'opération de filtrage et étant isolé l'un de l'autre après l'opération de filtrage, et en ce que le système d'entraînement (36) est relié à un premier disque (42) et, via une courroie sans fin (46), à au moins un disque (44) supplémentaire d'une telle façon, que ladite courroie (46) tourne directement sur un support (30, 32) ou sur un appui (58, 72) relié audit support.

2. Système d'entraînement selon la revendication 1,
**caractérisé en ce que** ladite courroie sans fin (46) est une courroie dentée.

3. Système d'entraînement selon la revendication 2,
**caractérisé en ce que** lesdits disques (42, 44) sont munis d'une denture extérieure (48), dans laquelle les dents (50) de ladite courroie dentée se trouvent en prise, et **en ce que** ladite courroie dentée (46) est limitée par des disques (54, 56) faisant saillie, d'un côtés ou des deux côtés, de ces disques dentés (42, 44).

4. Système d'entraînement selon la revendication 2 ou 3,
**caractérisé en ce que** ladite courroie dentée (46) s'appuie sur un listel de guidage (58) attaché sur lesdits supports (30, 32), auquel est affecté, au moins d'un côté, un disque (54) servant en tant que butée.

5. Système d'entraînement selon la revendication 4,
**caractérisé en ce qu'**un étrier en U (62) renferme lesdits disques dentés (42, 44), dont les extrémités des bras sont guidées des deux côtés aux bords longitudinaux dudit listel de guidage (58).

6. Système d'entraînement selon la revendication 4 ou 5,
**caractérisé en ce que** ledit listel de guidage (58) est fabriqué d'un matériau non métallique.

7. Système d'entraînement selon une quelconque des revendications 1 à 6,
**caractérisé en ce que** lesdits disques (42, 44) présentent un guide pour ladite courroie (46) sur leur surface périphérique.

8. Système d'entraînement selon la revendication 7,
**caractérisé en ce que** lesdits disques (42, 44) comprennent une rainure centrée (74), dans laquelle est guidé la traverse (76) de ladite courroie dentée (46).

9. Système d'entraînement selon la revendication 8,
**caractérisé en ce que** lesdits disques (42, 44) présentent une denture des deux côtés de ladite rainure.
